# EUROPÄISCHE PATENTSCHRIFT

(11) **EP 0 972 669 B1**
(45) Veröffentlichungstag und Bekanntmachung des Hinweises auf die Patenterteilung: **13.08.2008**
(21) Anmeldenummer: 99890183.9
(22) Anmeldetag: 08.06.1999
(51) Int. Cl.: B60M 1/28

(54) **Maschine zum Verlegen einer elektrischen Oberleitung**
Stringing apparatus for electrical catenary line
Machine de pose pour ligne caténaire électrique

(30) Priorität: 17.07.1998 AT 124198
(43) Veröffentlichungstag der Anmeldung: 19.01.2000
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- EP-A- 0 416 136
- FR-A- 2 129 540

## Beschreibung

Die Erfindung betrifft eine gleisverfahrbare Maschine zum Verlegen eines allgemein als Seil bezeichneten Fahrdrahtes bzw. eines Tragseiles einer elektrischen Oberleitung eines Gleises, mit einem auf Schienenfahrwerken abgestützten Maschinenrahmen, einer um eine Trommelachse drehbar gelagerten Seiltrommel, sowie mit einer um eine Rollenachse drehbaren Umlenkrolle zur Umlenkung des von der Seiltrommel abgewickelten Seiles, wobei die Umlenkrolle um eine Schwenkachse verdrehbar auf einem verschwenkbaren Kranausleger befestigt ist.

Eine derartige Maschine ist beispielsweise durch die EP 0 416 136 bekannt, wobei zum gleichzeitigen Verlegen von Fahrdraht und Tragseil zwei höhenmäßig voneinander distanzierbare Umlenkrollen auf einem Kranausleger befestigt sind. Die beiden den Fahrdraht bzw. das Tragseil aufweisenden Seiltrommeln sind jeweils auf einer Wippe gelagert, die durch einen Antrieb um eine in Maschinenlängsrichtung und horizontal verlaufende Schwenkachse verschwenkbar am Maschinenrahmen gelagert ist. Jeder Seiltrommel ist eine Vorrichtung zur Erzeugung einer Seilspannung zugeordnet, um damit bereits während der Verlegung die vorschriftsmäßige endgültige Seilspannung aufzubringen.

Die beiden Umlenkrollen sind jeweils um eine Schwenkachse verschwenkbar auf einer Rollenhalterung befestigt, die ihrerseits um eine vertikale Achse verschwenkbar am Kranausleger montiert ist. Durch diese verschwenkbare Lagerung der beiden Umlenkrollen ist in Verbindung mit der Verdrehung des Kranauslegers zur Erzielung eines zick-zack-förmigen Verlaufes des Fahrdrahtes eine Anpassung der Rollenebene möglich. Damit soll eine Verbiegung insbesondere des Fahrdrahtes vermieden werden.

Weitere Maschinen zur Verlegung einer elektrischen Oberleitung sind durch die DE 20 12 248 A, DE 526 889 C und FR 2 129 540 A bekannt.

Die Aufgabe der vorliegenden Erfindung liegt nun in der Schaffung einer der gattungsgemäßen Art entsprechenden Maschine, bei der eine exaktere, eine Verbiegung vermeidende Umlenkung des Seiles, insbesondere des Fahrdrahtes, möglich ist.

Erfindungsgemäß wird diese Aufgabe mit einer Maschine der eingangs beschriebenen Art dadurch gelöst, daß der Umlenkrolle ein Tastorgan zum Abtasten des Seiles zugeordnet ist, und daß das Tastorgan zur Steuerung eines der Schwenkachse zugeordneten Drehantriebes zum Verdrehen der Umlenkrolle um die Schwenkachse ausgebildet ist.

Mit dem Tastorgan besteht unter relativ geringem konstruktivem Mehraufwand die Möglichkeit, die durch das gespannte Seil vorgegebene Fluchtlinie zu erkennen und die Umlenkrolle über den Drehantrieb so lange zu verstellen, bis die Rollenachse der Umlenkrolle exakt normal zur Fluchtlinie zu liegen kommt. Dadurch kann zuverlässig eine Verbiegung bzw. Verdrallung des relativ steifen Fahrdrahtes vermieden werden. Diese exakte Ausrichtung der Umlenkrolle ist insbesondere in Verbindung mit einer relativ hohen, dem vorgeschriebenen endgültigen Wert entsprechenden Verlegespannung und einer entsprechenden Auslenkung des Kranauslegers zur Erzielung eines zick-zack-förmigen Fahrdrahtverlaufes sehr wichtig.

Weitere Vorteile der Erfindung ergeben sich aus den Unteransprüchen und der Zeichnung.

Im folgenden wird die Erfindung anhand eines in der Zeichnung dargestellten Ausführungsbeispieles näher beschrieben.

Es zeigen:
Fig. 1 eine vereinfachte Seitenansicht einer gleisverfahrbaren Maschine zum Verlegen eines Fahrdrahtes bzw. eines Tragseiles, mit einem Umlenkrollen aufweisenden Kranausleger,
Fig. 2 eine Draufsicht auf die Maschine,
Fig. 3 eine schematisierte Seitenansicht des Kranauslegers mitsamt den Tastorgane aufweisenden Umlenkrollen, und
Fig. 4 bis 6 jeweils eine stark vereinfachte Draufsicht auf eine Umlenkrolle.

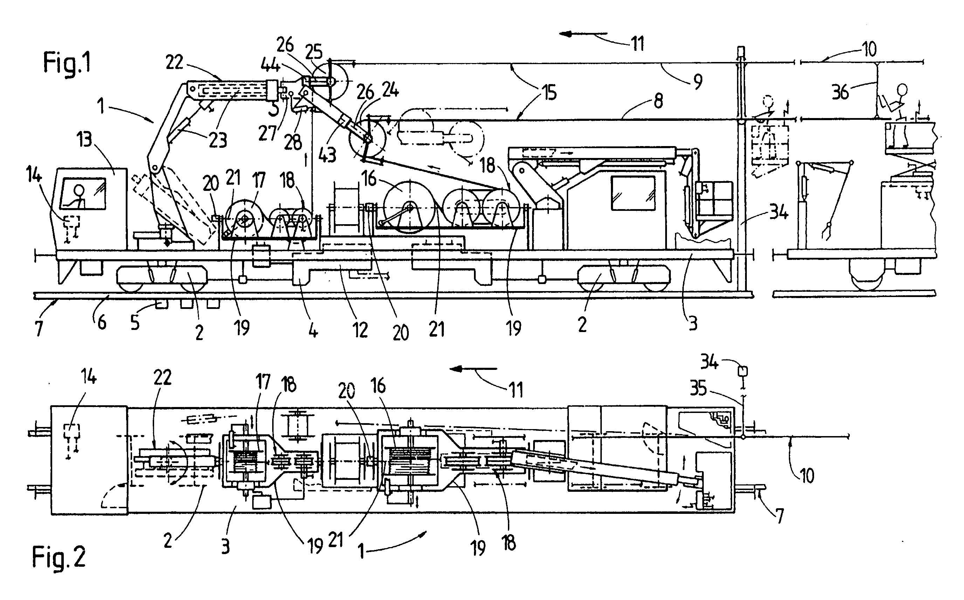

Die in Fig. 1 und 2 ersichtliche Maschine 1 weist einen auf Schienenfahrwerken 2 abgestützten Maschinenrahmen 3 auf und ist mit Hilfe eines Fahrantriebes 4 auf einem aus Schwellen 5 und Schienen 6 gebildeten Gleis 7 verfahrbar. Die Arbeitsrichtung der zum Verlegen eines Fahrdrahtes 8 und eines Tragseiles 9 (im folgenden der Einfachheit halber auch gemeinsam als Seil 15 bezeichnet) einer elektrischen Oberleitung 10 ausgebildeten Maschine 1 ist durch einen Pfeil 11 dargestellt. Für die Energieversorgung ist ein Motor 12 vorgesehen. In einer Fahrkabine 13 befindet sich eine zentrale Steuereinrichtung 14.

Zur Lagerung des aufgewickelten Fahrdrahtes 8 bzw. Tragseiles 9 ist eine Seiltrommel 16 bzw. 17 jeweils auf einer Wippe 19 befestigt. Diese ist mit Hilfe eines Antriebes 20 um eine in Maschinenlängsrichtung verlaufende Schwenkachse 21 verschwenkbar am Maschinenrahmen 3 gelagert. Jeder Seiltrommel 16 bzw. 17 ist eine Vorrichtung 18 zur Erzeugung einer Seilspannung zugeordnet. Diese auch als Winde zu bezeichnende Vorrichtung 18 ist ebenfalls auf der Wippe 19 befestigt.

Im vorderen Endbereich der Maschine 1 befindet sich ein durch Antriebe 23 höhen- und längenverstellbarer Kranausleger 22, der an seinem freien Ende eine Umlenkrolle 24 für den Fahrdraht 8 und eine weitere Umlenkrolle 25 für das Tragseil 9 aufweist. Beide Umlenkrollen 24,25 sind um eine Schwenkachse 26 drehbar auf einem Tragrahmen 27 gelagert und mit Hilfe eines Antriebes 28 in ihrer vertikalen Distanz zueinander verstellbar.

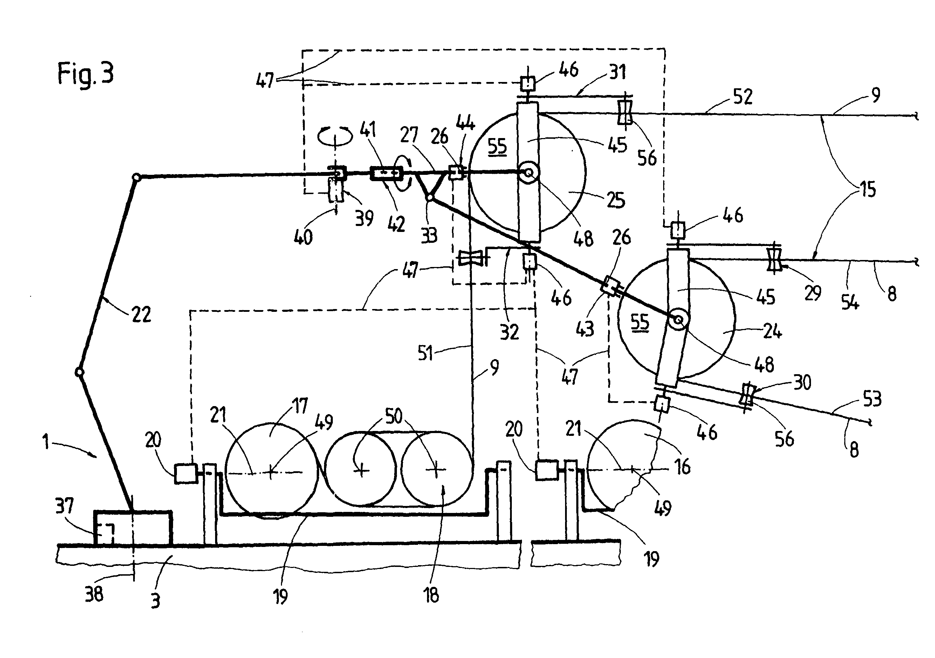

Die elektrische Oberleitung 10 ist im Bereich von Fahrleitungsmasten 34 an normal zur Gleislängsrichtung verlaufenden Auslegern 35 befestigt. Tragseil 9 und Fahrdraht 8 werden nach Fixierung am jeweiligen Ausleger 35 durch Hänger 36 miteinander verbunden. Bekanntlich erfolgt die Montage des Fahrdrahtes 8 im Zick-Zack-Verlauf, der durch eine entsprechende Auslenkung des Kranauslegers 22 mit Hilfe eines Drehantriebes 37 um eine vertikale Achse 38 (Fig. 3) erzielbar ist.

Wie in Fig. 3 ersichtlich, ist der Tragrahmen 27 mitsamt den beiden Umlenkrollen 24,25 mit Hilfe eines Drehantriebes 39 um eine vertikale Schwenkachse 40 verschwenkbar am Kranausleger 22 befestigt. Der Tragrahmen 27 ist aber auch um eine weitere, normal zur vertikalen Schwenkachse 40 verlaufende horizontale Schwenkachse 41 mit Hilfe eines Drehantriebes 42 verdrehbar ausgebildet. Damit ist ein Zick-Zack-Verlauf des Fahrdrahtes 8 herstellbar, während das Tragseil 9 in Gleismitte verbleibt. Wie bereits erwähnt, ist jede Umlenkrolle 24,25 jeweils mit Hilfe eines eigenen Drehantriebes 43,44 um die Schwenkachse 26 relativ zum Tragrahmen 27 verdrehbar. Beide Umlenkrollen 24,25 sind mit Hilfe eines in Fig. 1 ersichtlichen Antriebes 28 durch Verschwenken um eine Achse 33 in ihrer Vertikaldistanz zueinander verstellbar.

Jede Umlenkrolle 24,25 weist Tastorgane 29,30 bzw. 31,32 zur Steuerung der der jeweiligen Schwenkachse 26 zugeordneten Drehantriebe 43,44 bzw. weiterer Drehantriebe auf. Jedes Tastorgan 29 bis 32 setzt sich im wesentlichen aus einem auf einer Rollenhalterung 45 befestigten Drehpotentiometer 46 sowie einer mit diesem verbundenen Tastrolle 56 zusammen. Die beiden Drehpotentiometer 46 der Tastorgane 29 und 31 sind jeweils über eine Steuerleitung 47 mit dem Drehantrieb 39 verbunden. Das dem Tastorgan 32 zugeordnete Drehpotentiometer 46 ist über entsprechende Steuerleitungen 47 mit dem Drehantrieb 44 und dem Antrieb 20 verbunden. Das Drehpotentiometer 46 des Tastorganes 30 ist über eine entsprechende Steuerleitung 47 mit dem Drehantrieb 43 verbunden. Jede Umlenkrolle 24,25 ist um eine Rollenachse 48 verdrehbar am Tragrahmen 27 gelagert.

Die auf der Wippe 19 gelagerte Seiltrommel 16,17 weist jeweils eine normal zur Schwenkachse 21 verlaufende Trommelachse 49 auf, um die die jeweilige Seiltrommel 16,17 drehbar ist. Die Vorrichtung 18 zur Erzeugung einer Seilspannung weist ebenfalls normal zur Schwenkachse 21 der Wippe 19 verlaufende Rollenachsen 50 auf.

Zwischen Umlenkrolle 25 und der auf der Wippe 19 befindlichen Vorrichtung 18 für die Seilspannung ist ein zur Umlenkrolle 25 zuführender Seilabschnitt 51 des Tragseiles 9 vorgesehen, der vom Tastorgan 32 abgetastet wird. Das Tastorgan 31 dient zum Abtasten eines von der Umlenkrolle 25 wegführenden Seilabschnittes 52. Parallel dazu ist ebenfalls zwischen der weiteren Vorrichtung 18 und der Umlenkrolle 24 für den Fahrdraht 8 ein zuführender Seilabschnitt 53 und zwischen Umlenkrolle 24 und dem nächstfolgenden Ausleger 35 ein wegführender Seilabschnitt 54 positioniert.

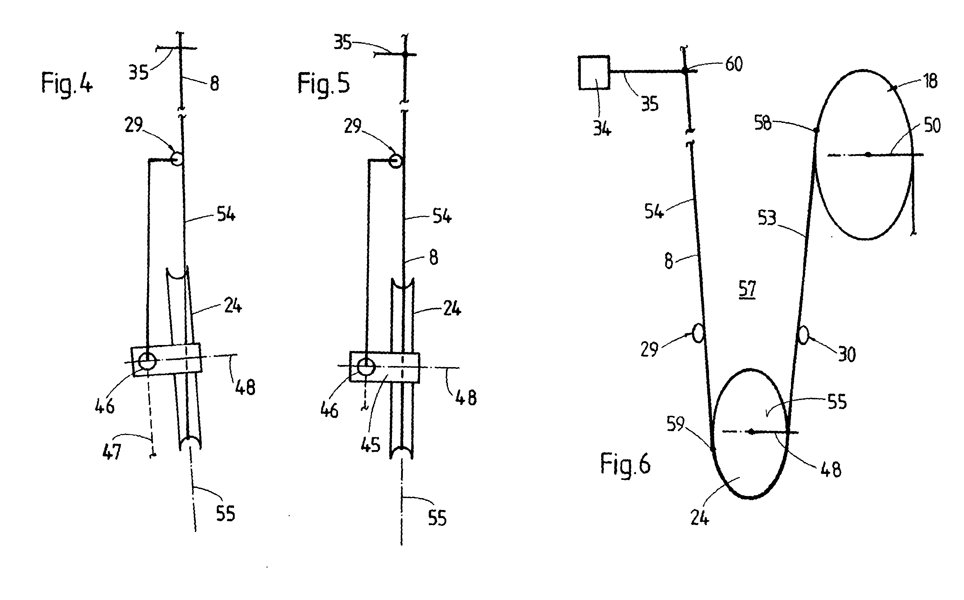

In der schematischen Darstellung gemäß Fig. 4 ist ersichtlich, daß der wegführende Seilabschnitt 54 des Fahrdrahtes 8 in einem Winkel kleiner 90° zur Rollenachse 48 verläuft und sich damit außerhalb einer normal zur Rollenachse 48 verlaufenden Rollenebene 55 befindet. In dieser Position ist das dem Tastorgan 29 zugeordnete Drehpotentiometer 46 verstimmt und bewirkt eine Beaufschlagung des Drehantriebes 39 (Fig. 3). Folglich kommt es zu einem Verschwenken des gesamten Tragrahmens 27 mitsamt den Umlenkrollen 24,25 um die vertikale Schwenkachse 40, bis der wegführende Seilabschnitt 54 exakt in der Rollenebene 55 liegt bzw. senkrecht zur Rollenachse 48 verläuft, wie in Fig. 5 dargestellt ist.

Parallel dazu erfolgt auch eine Abtastung des zuführenden Seilabschnittes 53 durch das Tastorgan 30 (Fig. 3). Durch das zugehörige Drehpotentiometer 46 wird der Drehantrieb 43 solange beaufschlagt, bis die Rollenebene 55 im rechten Winkel zur Trommelachse 49 bzw. den Rollenachsen 50 der zugeordneten Vorrichtung 18 verläuft. Parallel dazu kann alternativ durch das Drehpotentiometer 46 des Tastorganes 29 auch der Antrieb 20 der zugehörigen Wippe 19 beaufschlagt werden, bis die Trommelachse 49 bzw. die Rollenachsen 50 der Vorrichtung 18 im rechten Winkel zur Rollenebene 55 zu liegen kommen. Diese übereinstimmende Lage ist in Fig. 6 angedeutet.

Parallel zur vorgehend beschriebenen Steuerung der Umlenkrolle 24 erfolgt die Steuerung der Umlenkrolle 25 für das Tragseil 9, wobei das Tastorgan 31 zusätzlich zum Tastorgan 29 des Fahrdrahtes 8 für die Beaufschlagung des Drehantriebes 39 herangezogen werden kann. Da die präzise Abwicklung des im Querschnitt dickeren Fahrdrahtes 8 wichtiger ist als die Abwicklung des dünneren Tragseiles 9, hat jedoch die Abtastung durch das Tastorgan 29 Vorrang. Das den zu prüfenden zuführenden Seilabschnitt 51 des Tragseiles 9 abtastende Tastorgan 32 führt zu einer Beaufschlagung des Drehantriebes 44, bis der Seilabschnitt 51 in der Rollenebene 55 zu liegen kommt. Parallel dazu erfolgt über das Tastorgan 32 auch eine Beaufschlagung des Antriebes 20 der zugehörigen Wippe 19, bis die Trommelachse 49 und die beiden Rollenachsen 50 der Vorrichtung 18 normal zur Rollenebene 55 der Umlenkrolle 25 zu liegen kommen. Aufgrund der Geometrie des Kranauslegers 22 und dessen Position relativ zu den beiden Wippen 19 ist es zweckmäßig, wenn das den zuführenden Seilabschnitt 51 des Tragseiles 9 abtastende Tastorgan 32 auch den Antrieb 20 zur Verschwenkung der den Fahrdraht 8 tragenden Wippe 19 herangezogen wird.

Im folgenden wird die Funktionsweise der Maschine 1 näher beschrieben.

Für die Grundeinstellung der Tastorgane 29 bis 32 ist es zweckmäßig, wenn vor dem Arbeitseinsatz die beiden Wippen 19 in eine horizontale Lage und der Kranausleger 22 in eine in Maschinenlängsrichtung verlaufende Position verbracht werden. Die beiden Umlenkrollen 24,25 und die Wippen 19 sind dabei derart ausgerichtet, daß die Rollenachsen 48 und 50 sowie die Trommelachsen 49 normal zur Rollenebene 55 verlaufen. In dieser Grundeinstellung befinden sich die Drehpotentiometer 46 der Tastorgane 29 bis 32 in einer Nullstellung, in der die entsprechenden Drehantriebe 20,39,43,44 nicht beaufschlagt werden. Nach Fixierung von Tragseil 9 und Fahrdraht 8 am in Fig. 1 und 2 ersichtlichen Ausleger 35 fährt die Maschine 1 unter kontinuierlichem Abwickeln der Seile 15 von den entsprechenden Seiltrommeln 16,17 in der durch den Pfeil 11 dargestellten Arbeitsrichtung weiter. Dabei erfolgt bei Erreichen des nächsten Auslegers 35 eine Beaufschlagung des Drehantriebes 37, wodurch der Kranausleger 22 zur Erzielung des vorschriftsmäßigen Zick-Zack-Verlaufes um die Achse 38 verschwenkt wird. In weiterer Folge kommt es dadurch zu einer Verstimmung der Drehpotentiometer 46 der vier Tastorgane 29 bis 32 und damit zu einer entsprechenden Beaufschlagung der zugehörigen Antriebe 20,39,43,44, bis die für eine präzise Abwicklung insbesondere des Fahrdrahtes 8 erforderliche optimale Abwickelposition erreicht ist, in der die Trommelachsen 49 und die Rollenachsen 50 der zugehörigen Seiltrommel 16,17 bzw. der Vorrichtung 18 normal zur Rollenebene 55 der zugehörigen Umlenkrolle 24,25 verlaufen. Anders ausgedrückt ist es in Verbindung mit der erwähnten optimalen Abwickelposition wesentlich, daß - s. dazu Fig. 6 - die Rollenachse 48 der Umlenkrolle 24 sowie die Rollenachsen 50 der zugehörigen Vorrichtung 18 und die dazugehörige Trommelachse 49 normal zu einer Abwickelebene 57 verlaufen, die durch einen Ablaufpunkt 58 des zuführenden Seilabschnittes 53 von der Vorrichtung 18, einen weiteren Ablaufpunkt 59 des wegführenden Seilabschnittes 54 von der Umlenkrolle 24 und einen Befestigungspunkt 60 des Fahrdrahtes 8 mit dem Ausleger 35 gebildet ist. Unter Ablaufpunkt ist hier jener Punkt zu verstehen, an dem der Fahrdraht 8 die zugeordnete Umlenkrolle gerade verläßt. Das gleiche ist sinngemäß natürlich auch in bezug auf die entsprechende Abwicklung des Tragseiles 9 zu verstehen. In dieser optimalen Abwickelposition befindet sich die Rollenebene 55 der Umlenkrolle 24 in der Abwickelebene 57.

Alternativ besteht auch die Möglichkeit, daß das Tastorgan 29 den Drehantrieb 37 des Kranauslegers 22 zur Erzielung des Zick-Zack-Verlaufes steuert. Es besteht aber auch die Möglichkeit, die Verschwenkung der beiden Wippen 19 um die Schwenkachse 21 anhand der Antriebe 20 mit dem Grad der Verdrehung des Kranauslegers 22 um die vertikale Achse 38 zu koppeln. In Verbindung mit einer Einfachversion bestünde auch die Möglichkeit, lediglich ein Tastorgan 31 für die Ausrichtung beider Umlenkrollen 24,25 um die vertikale Schwenkachse 40 vorzusehen, während die Ausrichtung beider Umlenkrollen 24,25 um die jeweilige Schwenkachse 26 beispielsweise ausschließlich durch das Tastorgan 32 erfolgt.

## Patentansprüche

1. Gleisverfahrbare Maschine (1) zum Verlegen eines allgemein als Seil (15) bezeichneten Fahrdrahtes (8) bzw. eines Tragseiles (9) einer elektrischen Oberleitung (10) eines Gleises (7), mit einem auf Schienenfahrwerken (2) abgestützten Maschinenrahmen (3), einer um eine Trommelachse (49) drehbar gelagerten Seiltrommel (16,17), sowie mit einer um eine Rollenachse (48) drehbaren Umlenkrolle (24,25) zur Umlenkung des von der Seiltrommel (16,17) abgewickelten Seiles (15), wobei die Umlenkrolle (24,25) um eine Schwenkachse (26,40,41) verdrehbar auf einem verschwenkbaren Kranausleger (22) befestigt ist, **dadurch gekennzeichnet, daß** der Umlenkrolle (24,25) ein Tastorgan (29-32) zum Abtasten des Seiles (15) zugeordnet ist, und daß das Tastorgan (29-32) zur Steuerung eines der Schwenkachse (26,40,41) zugeordneten Drehantriebes (39,42,44) zum Verdrehen der Umlenkrolle (24,25) um die Schwenkachse (26,40,41) ausgebildet ist.

2. Maschine nach Anspruch 1, **dadurch gekennzeichnet, daß** die Umlenkrolle (24,25) durch je einen Drehantrieb (39,43,44) um zwei Schwenkachsen (26,40) verdrehbar ausgebildet ist und jedes jeweils einem Drehantrieb (39,43,44) zugeordnete Tastorgan (29-32) zum Abtasten eines zur Umlenkrolle (24,25) zuführenden Seilabschnittes (51,53) bzw. eines von der Umlenkrolle (24,25) wegführenden Seilabschnittes (52,54) vorgesehen ist.

3. Maschine nach Anspruch 1 mit einer die Seiltrommel (16,17) und eine Vorrichtung (18) zur Erzeugung einer Seilspannung lagernden, Wippe (19), die am Maschinenrahmen (3) gelagert und um eine in Maschinenlängsrichtung verlaufende Schwenkachse (21) verschwenkbar ausgebildet ist, **dadurch gekennzeichnet, daß** ein die Wippe (19) um die Schwenkachse (21) verschwenkender Antrieb (20) durch das den zuführenden Seilabschnitt (51) abtastende Tastorgan (30 bzw. 32) steuerbar ist.

4. Maschine nach Anspruch 1 mit einer Umlenkrolle (24) für den Fahrdraht (8) und einer weiteren Umlenkrolle (25) für das Tragseil (9), wobei beide Umlenkrollen (24,25) jeweils durch einen ersten und einen zweiten Drehantrieb (39,42) um eine vertikale bzw. horizontale Schwenkachse (40,41) drehbar auf dem Kranausleger (22) gelagert sind, **dadurch gekennzeichnet, daß** jeder Umlenkrolle (24,25) zwei Tastorgane (29,30 bzw. 31,32) zugeordnet sind, wobei die beiden jeweils den wegführenden Seilabschnitt (52,54) abtastenden Tastorgane (29,31) zur Steuerung des der vertikalen Schwenkachse (40) zugeordneten Drehantriebes (39) ausgebildet sind, während die beiden anderen Tastorgane (30,32) zur Steuerung des der Schwenkachse (26) zugeordneten Drehantriebes (43,44) vorgesehen sind.

## Claims

1. An on-track machine (1) for laying a contact wire (8) or a carrying cable (9), generally called cable (15), of an electrical catenary (10) of a track (7), including a machine frame (3) supported on on-track undercarriages (2), a cable drum (16,17) mounted for rotation about a drum axis (49), as well as a deflection roller (24,25), rotatable about a roller axis (48), for deflecting the cable (15) reeled off from the cable drum (16,17), wherein the deflection roller (24,25) is fastened for rotation about a swivel axis (26,40,41) to a pivotable crane jib (22), **characterized in that** a tracer element (29-32) for tracing the cable (15) is associated with the deflection roller (24,25), and that the tracer element (29-32) is designed for controlling a rotation drive (39,42,44), associated with the swivel axis (26,40,41), for rotating the deflection roller (24,25) about the swivel axis (26,40,41).

2. A machine according to claim 1, **characterized in that** the deflection roller (24,25) is designed for rotation about two swivel axes (26,40) by means of a respective rotation drive (39,43,44), and each tracer element (29-32), associated in each case with a rotation drive (39,43,44), is provided for tracing a cable section (51,53) leading towards the deflection roller (24,25) or a cable section (52,54) leading away from the deflection roller (24,25).

3. A machine according to claim 1, including a rocker (19) on which are supported the cable drum (16,17) and a device (18) for producing a cable tension, the rocker (19) being supported on the machine frame (3) and designed to be pivotable about a pivot axis (21) extending in the longitudinal direction of the machine, **characterized in that** a drive (20), pivoting the rocker (19) about the pivot axis (21), may be controlled by the tracer element (30 or 32) tracing the cable section (51) leading in.

4. A machine according to claim 1, including a deflection roller (24) for the contact wire (8) and a further deflection roller (25) for the carrying cable (9), wherein both deflection rollers (24,25) are mounted on the crane jib (22) for rotation about a vertical and horizontal swivel axis (40,41) in each case by means of a first and a second rotation drive (39,42), **characterized in that** two tracer elements (29,30 or 31,32) are associated with each deflection roller (24,25), wherein the two tracer elements (29,31) tracing in each case the cable section (52,54) leading away are designed for controlling the rotation drive (39) associated with the vertical swivel axis (40), while the other two tracer elements (30,32) are provided for controlling the rotation drive (43,44) associated with the swivel axis (26).

## Revendications

1. Machine ferroviaire (1) pour la pose d'un fil de contact (8) désigné généralement par câble (15) ou d'un câble porteur (9) d'une caténaire électrique (10) d'une voie ferrée (7), avec un châssis de machine (3) en appui sur des mécanismes de roulement ferroviaires (2), un tambour à câble (16, 17) logé de manière à pouvoir tourner autour d'un axe de tambour (49), ainsi qu'avec une poulie de renvoi (24, 25) tournant autour d'un axe de poulie (48) pour renvoyer le câble (15) déroulé du tambour à câble (16, 17), la poulie de renvoi (24, 25) étant fixée sur une flèche de grue pivotante (22) de manière à pouvoir tourner autour d'un axe de pivotement (26, 40, 41), **caractérisée en ce qu'**un organe palpeur (29 à 32) pour balayer le câble (15) est associé à la poulie de renvoi (24, 25) et que l'organe palpeur (29 à 32) est réalisé pour la commande d'un entraînement à rotation (39, 42, 44) associé à l'axe de pivotement (26, 40, 41) pour faire tourner la poulie de renvoi (24, 25) autour de l'axe de pivotement (26, 40, 41).

2. Machine selon la revendication 1, **caractérisée en ce que** la poulie de renvoi (24, 25) est réalisée de manière à pouvoir tourner autour de deux axes de pivotement (26, 40) par un entraînement à rotation à chaque fois (39, 43, 44) et chaque organe palpeur (29 à 32) à chaque fois associé à un entraînement à rotation (39, 43, 44) est prévu pour balayer une section de câble (51, 53) allant vers la poulie de renvoi (24, 25) ou une section de câble (52, 54) s'écartant de la poulie de renvoi (24, 25).

3. Machine selon la revendication 1 avec un archet (19) logeant le tambour à câble (16, 17) et un dispositif (18) pour générer une tension de câble, qui est logé sur le châssis de machine (3) et réalisé de manière à pouvoir pivoter autour d'un axe de pivotement (21) s'étendant dans la direction longitudinale de la machine, **caractérisée en ce qu'**un entraînement (20) faisant pivoter l'archet (19) autour de l'axe de pivotement (21) peut être commandé par l'organe palpeur (30 ou 32) balayant la section de câble d'amenée (51).

4. Machine selon la revendication 1 avec une poulie de renvoi (24) pour le fil de contact (8) et une autre poulie de renvoi (25) pour le câble porteur (9), les deux poulies de renvoi (24, 25) étant logées à chaque fois sur la flèche de grue (22) par un premier et un second entraînement à rotation (39, 42) de manière à pouvoir tourner autour d'un axe de pivotement vertical ou horizontal (40, 41), **caractérisée en ce que** deux organes palpeurs (29, 30 ou 31, 32) sont associés à chaque poulie de renvoi (24, 25), les deux organes palpeurs (29, 31) balayant à chaque fois la section de câble d'écart (52, 54) étant réalisés pour commander l'entraînement à rotation (39) associé à l'axe de pivotement vertical (40) tandis que les deux autres organes palpeurs (30, 32) sont prévus pour commander l'entraînement à rotation (43, 44) associé à l'axe de pivotement (26).
